# EUROPÄISCHE PATENTANMELDUNG

(11) **EP 1 327 904 A2**
(43) Veröffentlichungstag der Anmeldung: **16.07.2003**
(21) Anmeldenummer: 02028591.2
(22) Anmeldetag: 20.12.2002
(51) Int. Cl.: G02F 1/13357

(54) **Flüssigkristallanzeigevorrichtung mit farbiger Darstellung und Beleuchtungsvorrichtung**

(30) Priorität: 11.01.2002 DE 10201029
(71) Anmelder: SIEMENS AKTIENGESELLSCHAFT, 80333 München (DE)
(72) Erfinder: Abel, Heinz-Bernhard, Dr., 63762 Grossostheim (DE); Noll, Heinrich, Dr., 64823 Gross-Umstadt (DE)

(57) **Zusammenfassung**

Bei einer Flüssigkristallanzeige mit farbiger Darstellung, die ein Flüssigkristalldisplay (1) und einer Beleuchtungsvorrichtung aufweist ist vorgesehen, dass die Beleuchtungsvorrichtung rote, grüne und blaue Leuchtdioden (5, 51, 52, 53, 500) aufweist.

## Beschreibung

Flüssigkristallanzeigevorrichtung mit farbiger Darstellung und Beleuchtungsvorrichtung

Aus dem Stand der Technik ist es bekannt, Flüssigkristallanzeigevorrichtungen mit farbiger Darstellung, die ein Flüssigkristalldisplay aufweisen, mit Kaltkatodenleuchtstofflampen zu beleuchten. Diese Kaltkatodenleuchtstofflampen enthalten Quecksilber. Neben der schlechten Umweltverträglichkeit hat Quecksilber bei Temperaturen unter 0 Grad Celsius einen niedrigen Dampfdruck. Dieses führt zu einer starken Abhängigkeit der Helligkeit von der Umgebungstemperatur der Kaltkatodenleuchtstofflampe. Auch verändert sich der Farbort der Kaltkatodenleuchtstofflampe je nach Temperatur. Um Kaltkatodenleuchtstofflampen auch in Kraftfahrzeugen unter allen Bedingungen betreiben zu können, müssen sie mit einer zusätzlichen Heizung ausgestattet sein. Weiterhin ist die Ansteuerung dieser Kaltkatodenleuchtstofflampen aufwändig, besonders wenn ein großes Dimmverhältnis gefordert wird. Dies führt zusätzlich zu elektromagnetischen Störungen. Deshalb müssen besondere EMV-Maßnahmen durchgeführt werden. Das Spektrum der Kaltkatodenleuchtstofflampen enthält drei Hauptpeak im blauen, grünen und roten Bereich. Der blaue Peak ist relativ breit. Außerdem gibt es noch einige Nebenpeaks, was im Ergebnis noch zu einer Verbreiterung der anderen Farbpeaks führt. Dadurch müssen die Farbfilter der Flüssigkristallanzeige möglichst steilkantig angepaßt werden. Dies führt dazu, dass die Farbfilter aufwändig herzustellen sind und trotzdem diesen Flüssigkristallanzeigevorrichtung nur ein kleiner Teil der möglichen Farborte in einem Raumfahrtdiagramm erreichbar sind. Insbesondere ist es nicht möglich, ein Rot mit großer Wellenlänge und Farbsättigung zu erreichen. Dieses Rot ist jedoch erwünscht, um Alarmmeldungen mit der Flüssigkristallanzeigevorrichtung darzustellen. Ebenso sind viele Grüntöne nicht darstellbar. Die steilkantigen Farbfilter führen weiterhin zu einer Verminderung der Transmission des Flüssigkristalldisplays.

Aufgabe der Erfindung ist es daher, eine Beleuchtung für eine Flüssigkristallanzeigevorrichtung mit farbiger Darstellung anzugeben, bei der eine große Farbsättigung erreicht wird. Diese Aufgabe wird dadurch erreicht, dass die Beleuchtungsvorrichtung der Flüssigkristallanzeigevorrichtung rote, grüne und blaue Leuchtdioden (LED) aufweist. Vorteilhaft ist es dabei, dass es durch die spektrale Trennung der Leuchtdioden möglich ist, die Farbfilterkanten flacher zu gestalten. Hierdurch werden die Filter kostengünstiger und es wird eine höhere Transmission des Flüssigkristalldisplays erreicht. Besonders vorteilhaft ist es, blaue Leuchtdioden auf der Basis von GaInN mit einer dominanten Wellenlänge von 470 nm, grüne Leuchtdioden auf der Basis von GaInN mit einer dominanten Wellenlänge von 525 nm und rote Leuchtdioden auf der Basis AlInGaP mit einer dominanten Wellenlänge von 630 nm zu verwenden. Diese Leuchtdioden haben eine große Lichtstärke und sind somit in der Lage, das Flüssigkristalldisplay mit großer Leuchtdichte zu beleuchten. Wenn jeweils eine rote, grüne und blaue Leuchtdiode in einem gemeinsamen Gehäuse angeordnet ist, sind die farblich verschiedenen Leuchtdioden räumlich nahe beisammen. Dadurch mischt sich das Licht dieser drei Farben sauber zu weiß.

Wenn das Gehäuse eine SMD-Bauform aufweist, kann es besonders kostengünstig und einfach auf eine Leiterplatte montiert werden.

Wenn das Gehäuse sechs Anschlüsse hat, können die einzelnen Farben separat angesteuert werden. Damit ist es möglich, die einzelnen Farben in Reihe zu schalten und die Anzahl der Vorwiderstände zu minimieren. Die Leuchtdioden sind damit einfach ansteuerbar und dimmbar. Wenn die Leuchtdioden als zweidimensionales Array hinter dem Flüssigkristalldisplay angeordnet sind, wird das Licht mehrerer Leuchtdioden gemischt und die Toleranzen der einzelnen Leuchtdioden werden minimiert. Der Weißpunkt kann durch die Wahl der blauen, grünen und roten Intensität individuell eingestellt werden.

Die Gleichmäßigkeit kann noch gesteigert werden, wenn zwischen den Leuchtdioden und dem Flüssigkristalldisplay eine Streuscheibe angeordnet ist. Zur weiteren Erhöhung der Leuchtdichte und Verbesserung der Gleichmäßigkeit ist es vorteilhaft, wenn zwischen der Streuscheibe und dem Flüssigkristalldisplay eine Lichtmanagementfolie angeordnet ist.

Es ist auch möglich, statt eines transmissiven Flüssigkristalldisplays eine reflektives Flüssigkristalldisplay zu verwenden. Hierbei muß das Licht zweimal durch das Farbfilter des Flüssigkristalldisplays. Hierbei kann das Flüssigkristalldisplay von vorne beleuchtet werden.

Sofern das Flüssigkristalldisplay schnell genug schaltet, kann auf ein Farbfilter verzichtet werden. Dann wird durch sequentielles Einschalten der verschiedenen Leuchtdiodenfarben im Auge des Betrachters ein farbiges Bild erzeugbar, dessen Farbe durch die Leuchtdauer und Intensität der einzelnen Leuchtdiodenfarben und den Flüssigkristalldisplay bestimmt wird. Hierbei müssen nur die Schaltzeiten der Leuchtdioden mit denen des Flüssigkristalldisplays synchronisiert sein.

Die Erfindung wird nachfolgend anhand der Figuren näher erläutert.

Es zeigen:
- Fig. 1:: ein typisches Spektrum einer Kaltkatodenleuchtstofflampe;
- Fig. 2:: ein Normfarbdiagramm nach DIN 5033 mit einem ersten Farbdreieck der Farben, die durch eine Flüssigkristallvorrichtung mit Kaltkatodenleuchtstofflampe dargestellt werden können, und einem zweiten Farbdreieck, mit den Farben, die mit der erfindungsgemäßen Flüssigkristallanzeige dargestellt werden können;
- Fig. 3:: ein Ausführungsbeispiel einer erfindungsgemäßen Flüssigkristallanzeigevorrichtung mit einem transmissiven Farbdisplay;
- Fig. 4:: den Ausschnitt A aus Fig. 3;
- Fig. 5:: ein Ausführungsbeispiel einer erfindungsgemäßen Flüssigkristallanzeigevorrichtung mit einem reflektiven Farbdisplay.

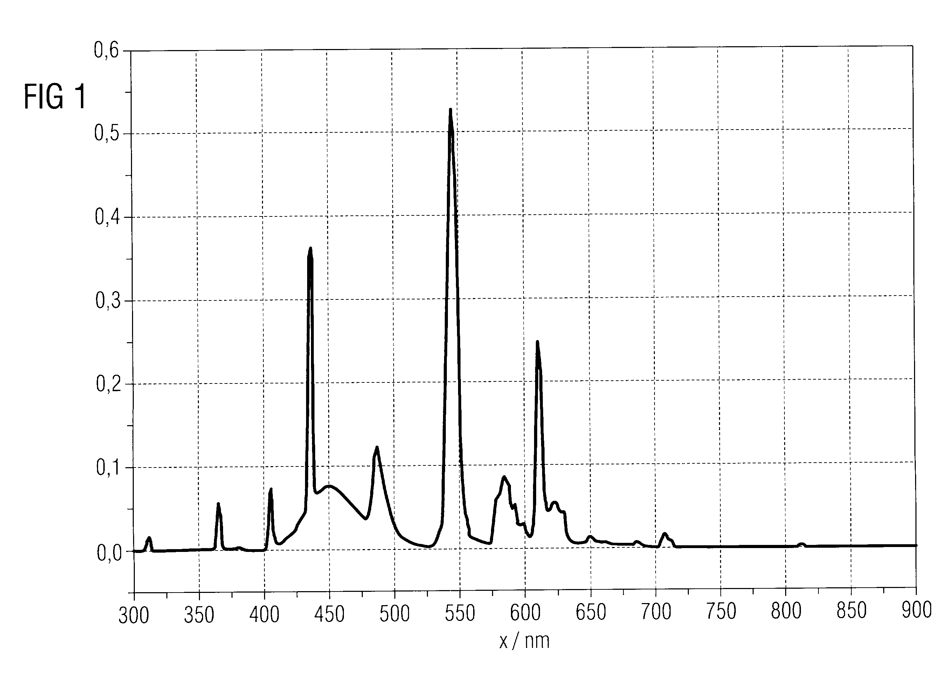

Das typische Spektrum einer Kaltkatodenleuchtstofflampe in Fig. 1 zeigt, dass bei etwa 440 Nanometer ein blauer Peak ist, bei 440 Nanometer ein blauer Hauptpeak ist, bei 550 Nanometer ein grüner Hauptpeak ist und bei 620 Nanometer ein roter Hauptpeak ist. Weiterhin erkennt man, dass die Intensität der Peaks unterschiedlich groß ist und die zahlreichen Nebenpeaks. Weiterhin kann man erkennen, dass diese beispielhafte Kaltkatodenleuchtstofflampe nur sehr geringe Rotanteile im Bereich zwischen 650 und 700 Nanometer aufweist.

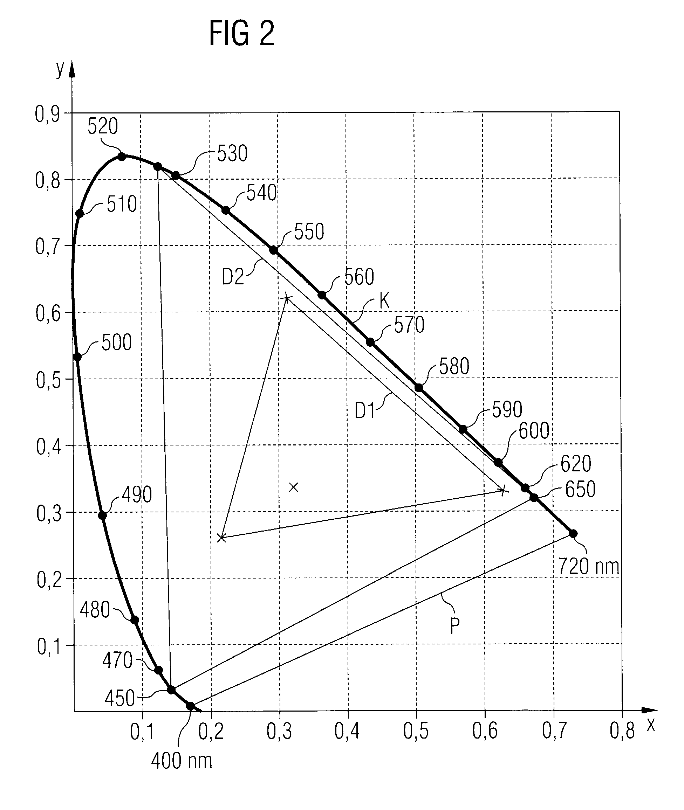

In der Normfarbtafel nach DIN 5033 in Fig. 2 sind auf einer Kurve K die sichtbaren Spektralfarben im Bereich von 380 bis ca. 720 Nanometer aufgetragen. Die Kurve K wird auch Spektralfarbenzug genannt. Die Kurve K wird durch die sogenannte Purpurgerade P geschlossen. Die Fläche wird auch als Farbebene bezeichnet. In dieser Farbebene sind alle Farben darstellbar. Beim Wert x = y = 0,33 liegt der sogenannte Weißpunkt. Ein Dreieck D1 zeigt den Farbbereich, der mit einer Flüssigkristallanzeige mit Kaltkatodenleuchtstofflampenbeleuchtung dargestellt werden kann. Ein Dreieck D2 zeigt den Farbbereich, der mit der erfindungsgemäßen Flüssigkristallanzeige dargestellt werden kann. Man erkennt zum einen, dass bei Leuchtdiodenbeleuchtung der Farbbereich wesentlich größer ist und zum anderen, dass die Grundfarben Rot, Grün und Blau wesentlich besser dargestellt werden können.

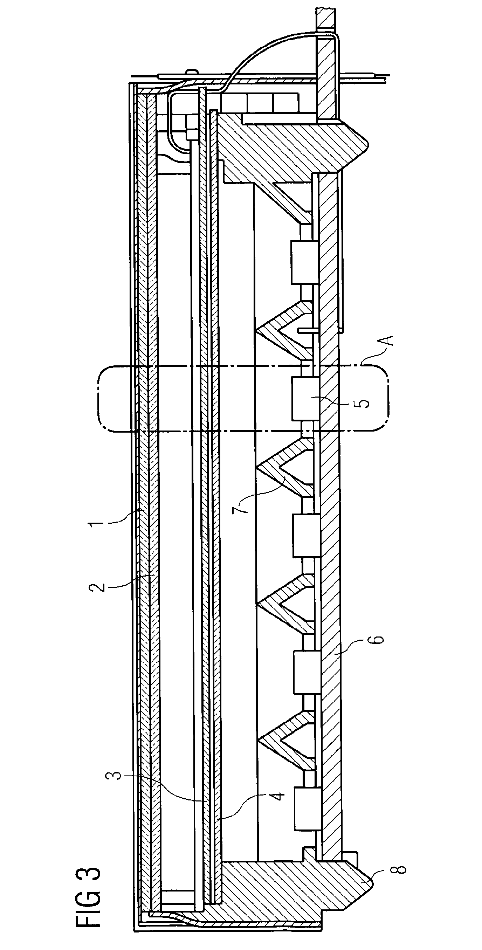

In Fig. 3 erkennt man ein Flüssigkristalldisplay 1, einen Farbfilter 2, eine Lichtmanagementfolie 3, eine Streuscheibe 4, Leuchtdiodengehäuse 5, eine Leiterplatte 6, Reflektoren 7 und ein Gehäuse 8. In den Leuchtdiodengehäusen der Leuchtdiode 5 ist vorteilhafterweise jeweils eine rote, grüne und blaue Leuchtdiode integriert. Das Licht im Leuchtdiodengehäuse 5 gelangt direkt oder durch Reflektion über die Reflektoren 7 zur Streuscheibe 4. Dort wird es gleichmäßig verteilt und gelangt über die Lichtmanagementfolie 3 und den Farbfilter 2 zum Flüssigkristalldisplay 1.

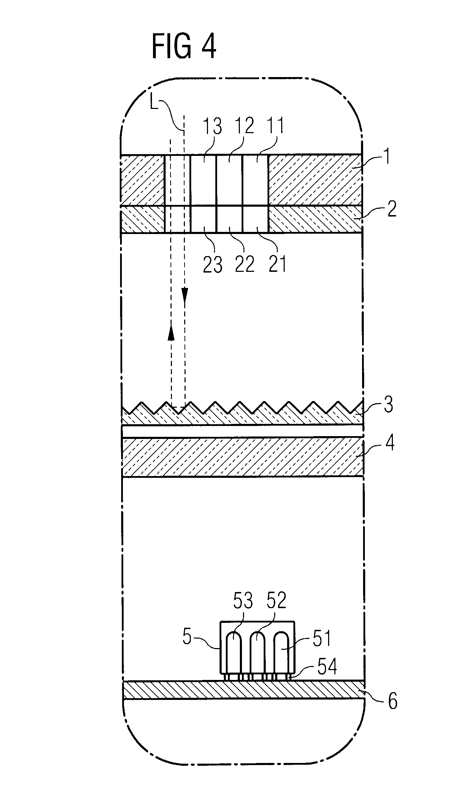

In Fig. 4 erkennt man, dass das Flüssigkristalldisplay 1 aus einer Vielzahl von Flüssigkristallzellen aufgebaut ist, von denen Flüssigkristallzelle 11, 12, 13 dargestellt sind. Jeder Flüssigkristallzelle 11, 12, 13 ist ein Teilbereich 21, 22, 23 des Farbfilters 2 zugeordnet, wobei der Teilbereich 21 beispielsweise rot, der Teilbereich 22 grün und der Teilbereich 23 blau ausgestaltet ist. So kann durch die Flüssigkristallzelle 11 ein rotes Bildpixel durch die Flüssigkristallzelle 12 ein grünes Bildpixel und die Flüssigkristallzelle 13 ein blaues Bildpixel dargestellt werden. Der genaue Aufbau und die Funktionsweise der Flüssigkristallzellen 11, 12, 13 wird nicht dargestellt, da sie im Stand der Technik hinreichend bekannt sind.

Die Leuchtdiodegehäuse 5 weist eine rote Leuchtdiode 51, eine grüne Leuchtdiode 52 und eine blaue Leuchtdiode 53 auf, die über separate Anschlüsse 54 mit der Leiterplatte 6 verbunden sind. Das in dem Leuchtdiodegehäuse 5 erzeugte Licht dringt durch die Streuscheibe 4 in die Lichtmanagementfolie 3. Von dort verteilt die Lichtmanagementfolie zum einen Licht, das von der Streuscheibe 4 auftrifft. Die Lichtmanagementfolie 3 ist auf ihrer dem Farbfilter 2 zugewandten Seite derart aufgebaut, dass sich Licht, das von außen senkrecht auf das Flüssigkristalldisplay 1 trifft und dieses und den Farbfilter 2 durchdringt wieder zum Farbfilter 2 reflektiert und so eine Beleuchtung von außen, beispielsweise durch Tageslicht, das Flüssigkeitsdisplay 1 zusätzlich beleuchtet. Dies wird beispielhaft durch einen Lichtstrahl L dargestellt.

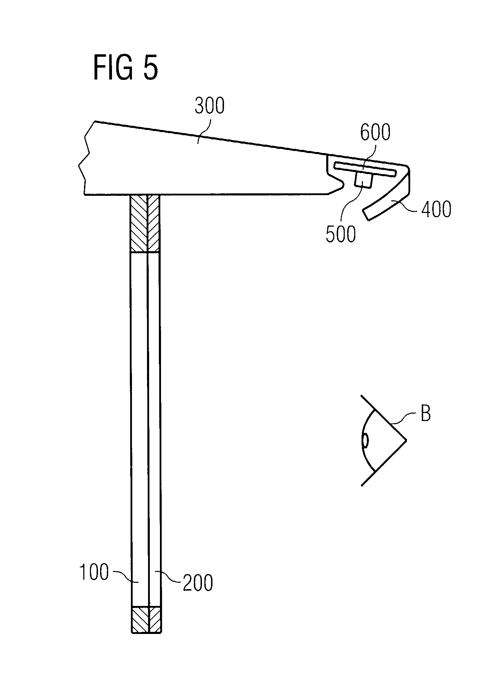

In Fig. 5 erkennt man ein reflektives Flüssigkristalldisplay 100, einen Farbfilter 200, eine Hutze 300, eine Blende 400, eine Leuchtdiode 500, eine Leiterplatte 600 und ein Auge B eines Betrachters. Das reflektive Flüssigkristalldisplay 100 weist ebenfalls Flüssigkristallzellen auf, die jeweils einen Abschnitt des Farbfilters 200 zugeordnet sind. Die Leuchtdiode 500 ist wie das Leuchtdiodengehäuse 5 in Fig. 4 aufgebaut. Das reflektive Flüssigkristalldisplay 100 wird durch eine Anzahl von Leuchtdioden 500 beleuchtet, die auf der Leiterplatte 600 angeordnet sind. Je nach Ansteuerung der einzelnen Flüssigkristallzellen des Flüssigkristalldisplays 100 wird das Licht, das von den RGB-Leuchtdioden 500 auf das Farbfilter 200 fällt, reflektiert oder absorbiert. So kann je nach Ansteuerung der Flüssigkristallzellen ein farbiges Bild dargestellt werden.

## Patentansprüche

1. Flüssigkristallanzeigevorrichtung mit farbiger Darstellung, die ein Flüssigkristalldisplay (1, 100) und eine Beleuchtungsvorrichtung aufweist, **dadurch gekennzeichnet, dass** die Beleuchtungsvorrichtung rote, grüne und blaue Leuchtdioden (5, 51, 52, 53, 500) aufweist.

2. Flüssigkristallanzeige nach Anspruch 1, **dadurch gekennzeichnet, dass** jeweils mindestens eine rote, grüne und blaue Leuchtdiode in einem Leuchtdiodengehäuse (5) angeordnet ist.

3. Flüssigkristallanzeige nach Anspruch 2, **dadurch gekennzeichnet, dass** das Leuchtdiodengehäuse (5) sechs elektrische Anschlüsse (54) aufweist.

4. Flüssigkristallanzeige nach Anspruch 2 oder 3, **dadurch gekennzeichnet, dass** das Leuchtdiodengehäuse (5) als SMD-Bauteil ausgestaltet ist.

5. Flüssigkristallanzeige nach einem der vorstehenden Ansprüche, **dadurch gekennzeichnet, dass** die Leuchtdiodengehäuse (5, 500) oder die Leuchtdiode (51, 52, 53) als zweidimensionales Array angeordnet sind.

6. Flüssigkristallanzeige nach einem der vorstehenden Ansprüche, **dadurch gekennzeichnet, dass** zwischen dem Flüssigkristalldisplay (1, 100) und den Leuchtdioden (5, 51, 52, 53, 500) eine Streuscheibe (4) angeordnet ist.

7. Flüssigkristallanzeige nach Anspruch 6, **dadurch gekennzeichnet, dass** zwischen der Streuscheibe (4) und dem Flüssigkristalldisplay (1) eine Lichtmanagementfolie (3) angeordnet ist.

8. Flüssigkristalldisplay nach einem der vorstehenden Ansprüche, **dadurch gekennzeichnet, dass** zwischen den Leuchtdiodengehäuse (5) Reflektoren angeordnet sind.

9. Flüssigkristallanzeige nach einem der Ansprüche 1 bis 4, **dadurch gekennzeichnet, dass** die Kristallanzeige ein reflektives Flüssigkristalldisplay (100) aufweist.

10. Flüssigkristallanzeige nach einem der vorstehenden Ansprüche, **dadurch gekennzeichnet, dass** die Farben der einzelnen Leuchtdioden voll gesättigt sind.

11. Flüssigkristallanzeige nach einem der vorstehenden Ansprüche, **dadurch gekennzeichnet, dass** die Leuchtdioden (51, 52, 53) jeweils einer Farbe sequentell angesteuert werden.
